Europäisches Patentamt

(19) **European Patent Office**

**Office européen des brevets**

(11) Publication number: **0 010 969**
**A1**

(12) # EUROPEAN PATENT APPLICATION

(21) Application number: **79302413.4**

(22) Date of filing: **01.11.79**

(51) Int. Cl.³: **B 01 J 47/02, C 02 F 1/42, B 01 D 15/00**

(30) Priority: **02.11.78 US 957182**

(43) Date of publication of application: **14.05.80**
**Bulletin 80/10**

(84) Designated Contracting States: **BE DE FR GB IT**

(71) Applicant: **PURDUE RESEARCH FOUNDATION, Graduate House East, West Lafayette Indiana (US)**

(72) Inventor: **Etzel, James E., c/o Purdue University, West Lafayette, Indiana (US)**
Inventor: **Wachinski, Anthony M., 7819 Deerfield Lane, Panama City, Florida (US)**

(74) Representative: **Warren, Keith Stanley et al, BARON & WARREN 16 Kensington Square, London W8 5HL (GB)**

(54) Liquid treating method and apparatus.

(57) A method and apparatus for water softening uses less than approximately 20 micron diameter fine mesh magnetized ion exchange particles (14) in columnar operation. The particles (14) are formed by encapsulating a core of magnetic material in ion exchange resin. The particles are magnetized and disposed in a column (10) where they attach to magnetic mesh retention means (12) such as stainless steel wool. The design of the column (10) permits use of the fine mesh ion exchange particles (14) and their properties of rapid exchange rates and efficient utilization of resin capacity while avoiding prior art problems of plugging, fouling, and excessive pressure drop.

ACTORUM AG

# LIQUID TREATING METHOD AND APPARATUS

A current practice by individual, institutional, industrial, and municipal consumers for the production of soft water is to use fixed-bed ion exchange resins, usually a sulfonated cation exchange resin such as a styrene-divinylbenzene copolymer. Hydraulic considerations currently limit resin particles to a size which gives maximum capacity with an acceptable pressure drop at high flow rates. Most ion exchange resins used currently are generally sherical in shape and have diameters of 300 to 1000 microns (i.e., 20-50 mesh, U.S. Standard Screens).

However, the kinetics of 20-50 mesh resins impose limitations on column design that could be eliminated or at least significantly moderated by using a finer mesh resin. Fine mesh resins having diameters of only 15-20 microns (rather than the 300 to 1000 micron diameter resins now in use) have ion exchange rates or the order of 15 times faster than the conventional larger diameter resins and more efficient use of the ion exchange capacity. However, they have not been found acceptable for commercial use in the past because of hydraulic considerations. In fixed beds, fine mesh ion exchange resins cause excessive pressure drops, are prone to clogging and fouling, and are extremely difficult to backwash because they are easily carried out of the ion exchange column in the backwash cycle.

For many years the art has attempted to solve these problems so that advantage could be taken of the faster exchange rates achievable by using resins with increased surface area. For example, U.S. patent No. 2,460,516 to Luaces suggested that an ion exchange resin be deposited on the surface of a porous body to increase the surface area available during water softening. Voigtman, U.S. Patent No. 2,798,850, disclosed coating felted or bat-type fibrous materials such as cellulosics, glass, or asbestos with various ion exchange resins to increase their exchange capacity.

Others have encapsulated magnetic particles in ion exchange resins. Examples of this are Weiss et al., U.S. patent No. 3,560,378, Turbeville, U.S. patent No. 3,657,119, and Weiss et al., U.S. patent No. 3,890,224. Weiss et al. '378 recognized the problems that fine ion exchange resins exhibited such as excessive pressure drop, quick fouling, and loss through entrainment. Their solution, however, was to use the encapsulated magnetic resins in an agitated mixer system during liquid treatment and then to magnetically coalesce the resin particles after treatment. Weiss et al. '378 did not purport to solve the problems associated with fine mesh resins when used in a fixed-bed process. They did compare the reation kinetics of gamma iron oxide particles encapsulated with trimethylol phenol N,N bis (3-amino propylmethylamine) having a particle size range of 250-500 microns with a standard size 350-1200 micron resin in fixed bed operation and found them to be substantially the same. However, no data on bed size, flow rates, or pressure drops was reported.

Svyadoshich et al. in "Wastewater Purification Using Superparamagnetic Dispersed Ion Exchanger in Constant Magnetic Field", 10 Soviet Inventions Illustrated 2 (# 41 Nov. 1976), used a column surrounded by an electromagnetic coil which produced a magnetic field of (approximately 27852 A/m) (350 Oersted) and a super-paramagnetic cation exchange resin (identified only as KU-2-8-f) 40-60 microns in diameter to obtain ion exchange rates eight times faster than conventional size resins.

In the field of water purification, attempts have been made to use high-gradient magnetic fields to separate and extract weakly paramagnetic submicron particles from fluid streams. DeLatour and Kolm, "High-Gradient Magnetic Separation: A Water Treatment Alternative", J. Am. Water Works Assoc. 325-327 (June 1976), discussed a number of suggestions for separation including possible use of a matrix of stainless steel wool in a column under the influence of a magnetic field to capture and hold magnetic particles from a fluid stream.

However, none of the above-mentioned prior art has satisfactorily solved the problems associated with fine mesh resins in fixed-bed columnar operation. Accordingly, the need still exists for increasing the efficiency of ion exchange processes which used fixed-bed columnar operation and yet will avoid the problems associated with fine mesh ion exchange resins when used in such columns.

- 4 -

It is an object of this invention to enable use of fine mesh ion exchange particles (i.e, less than approximately 20 micron size) in a columnar mode of operation to obtain the advantages of rapid exchange rates and more efficient utilization of resin capacity.

The present invention consists in apparatus for treating liquids characterised by a hollow column with an inlet and an outlet; magnetic mesh retention means disposed in said column; and fine mesh ion exchange particles having a core of magnatic material encapsulated in an ion exchange resin magnetically attached to said retention means, whereby rapid exchange rates are achievable in said column without excessive pressure drop.

The invention also consists in a method for treating liquids characterised by the steps of conveying liquid to be treated to the inlet of a column containing fine mesh ion exchange particles having a core of magnetic material encapsulated in an ion exchange resin and magnetically attached to magnetic mesh retention means; contacting said liquid with said resin particles in the column for a time sufficient to effect an ion exchange; and conveying the treated liquid from the column.

In one embodiment barium ferrite powder or other suitable ferromagnetic materials having a particles size of about 2 microns is encapsulated within an ion exchange resin, yielding a final particle size less than approximately 20 microns. The particles are then magnetized and distributed throughout an ion exchange column loosely filled with a magnetic mesh retention means such as a stainless steel wool where they are allowed to attach themselves. The column is typically operated in a down or up flow mode, i.e., the liquid to be treated is transported to the top or bottom of the column and flows through the resin attached to the magnetic mesh retention means at rates of approximately 48.16 $1/s/m^3$ (litres per second per cubic metre) (about 18 $gpm/ft^3$-gallons per minute per cubic foot). In a preferred form of the invention, the resin is an organic polymer suitable for use in water softening. Softening is accomplished by the exchange of monovalent sodium cations on the resin for divalent cations in the liquid being treated. After breakthrough capacity is reached, the column is regenerated by flowing a regenerant solution such as a solution of sodium chloride at rates of up to about 16.05 $1/s/m^3$ (approximately 6 $gpm/ft^3$) in a direction countercurrent or cocurrent to that of normal operation. Contact times of less than 30 minutes are sufficient for resin regeneration, and the magnetic mesh retention means maintains the ion exchange particles in the column.

Maintenance of a relatively high void volume throughout the column keeps pressure drops through the column at acceptable levels. For example, at flow rates of about 48.16 $1/s/m^3$ (approximately 18 $gpm/ft^3$), only about 203585$N/m^2/m$ (approximately 9 psi/ft) of column bed drop was observed. For comparison purposes, the pressure drop in a column using nonmagetic ion exchange resin of the same particle size approaches about $226206 \times 10^2 N/m^2/m$ (approximately 1000 psi/foot) of bed.

Figure 1 is a diagrammatic representation of an ion exchange column containing magnetic mesh retention means used in the practice of this invention.

Figure 2 is a graph comparing pressure drop versus flow rate for standard size resins and the fine mesh ion exchange particles of this invention in columnar operation.

The fine mesh ion exchange particles used in the practice of this invention may be made by methods well known in the art. For example, magnetic ion exchange resin particles may be prepared using the methods disclosed by Weiss et al., U.S. patent Nos. 3,890,224 and 3,560,378. Although the preferred final particle size is approximately 15-20 micron, much smaller size resin particles, as small as 4-5 micron, are operable in the invention. Thickness of the resin encapsulation over the magnetic core material is not critical and may vary depending upon the final size of the particles desired. The magnetic core of the particle may consist of any suitable ferromagnetic material such as elemental iron, gamma iron oxide, magnetite or barium ferrite (Ba $Fe_{12}O_{19}$). Barium ferrite is preferred because it is highly resistant to acids and bases, is relatively inexpensive, has a high magnetizing force, and exhibits a high degree of resistance to self-demagnetization.

Depending on the specific properties desired and the specific type of ions desired to be removed from (or added to) the liquid to be treated, a wide variety of both cation and anion exchange resins, well known in the art, may be used to encapsulate the magnetic core material. For example, the resins disclosed in Weiss et al., U.S. patent Nos. 3,890,224, 3,560,378 and 3,645,922 may be used. In most water softening systems, the ions which are removed from the water are divalent cations such as calcium and magnesium. Thus, in those systems, it is preferable to use a cation exchange resin such as a styrene divinylbenzene resin or a sulfonated ethylene-vinyl acetate copolymer cross-linked about 25% with toluene diisocyanate.

After encapsulation, the particles are magnetized by exposing them to a magnetic field of 1 $Wb/m^2$ (10,000 Gauss) or more for about 5 minutes. A preferred method of magnetizing the particles is to slurry them into a square channel of 12 mm width and 3 mm thickness between faces of a laboratory magnet with 15.00 cm poles tapered to 5.0 cm faces. Fine mesh ion exchange particles magnetized in this manner will remain firmly attached to the magnetic mesh retention means of the invention at flow rates of up to about 48.16 $l/s/m^3$ (approximately 18 $gpm/ft^3$) in both the operational and regeneration mode of the column. To distribute the fine mesh ion exchange particles evenly over the surface of the magnetic mesh retention means, water is pumped through the column containing the retention means at high flow rates of about 48.16 - 53.52 $l/s/m^3$ (approximately) 18-20 $gpm/ft^3$). The particles are slowly added to the column and are evenly distributed throughout the column by the flowing water. This even distribution remains during normal service operational flow rate of about 5.35-10.7 $l/s/m^3$ (approximately 2-4 $gpm/ft^3$) and normal regeneration flow rates of about 10.7-13.4 $l/s/m^3$ (approximately 4-5 $gpm/ft^3$) as well as at the higher flow rates mentioned above. Although even distribution of the fine mesh ion exchange particles is preferred, it is not critical to the operation of the system.

In domestic water softening applications, the preferred magnetic mesh retention means is stainless steel wool. The stainless steel wool serves two purposes. It serves as a matrix to which the magnetic resin particles attach themselves, and it also serves to provide a tortuous path for the liquid to be treated and fills extra space in the column. Thus, any fine mesh ion exchange particles dislodged during operation or regeneration may be captured by the extra wool downstream. To provide for an acceptably low pressure drop through the column during operation and yet provide sufficient area for the magnetic particles to attach, preferably, the magnetic mesh occupies only 2 to 5 percent of the total volume. Even after the fine mesh ion exchange particles have been loaded onto the steel wool, about 80 percent of the volume in the column remains void space.

For industrial water treatment applications, where corrosive or acidic media may be encountered, the preferred magnetic mesh retention means is a material which will resist attack by corrosive or acidic media. Such mesh retention means may take the form of a ferromagnetic material such as stainless steel wool coated with an acid resistant coating or a magnetic material, such as nickel or nickel alloys, which are more resistant to acid attack or which have been treated to resist corrosion and acid attack.

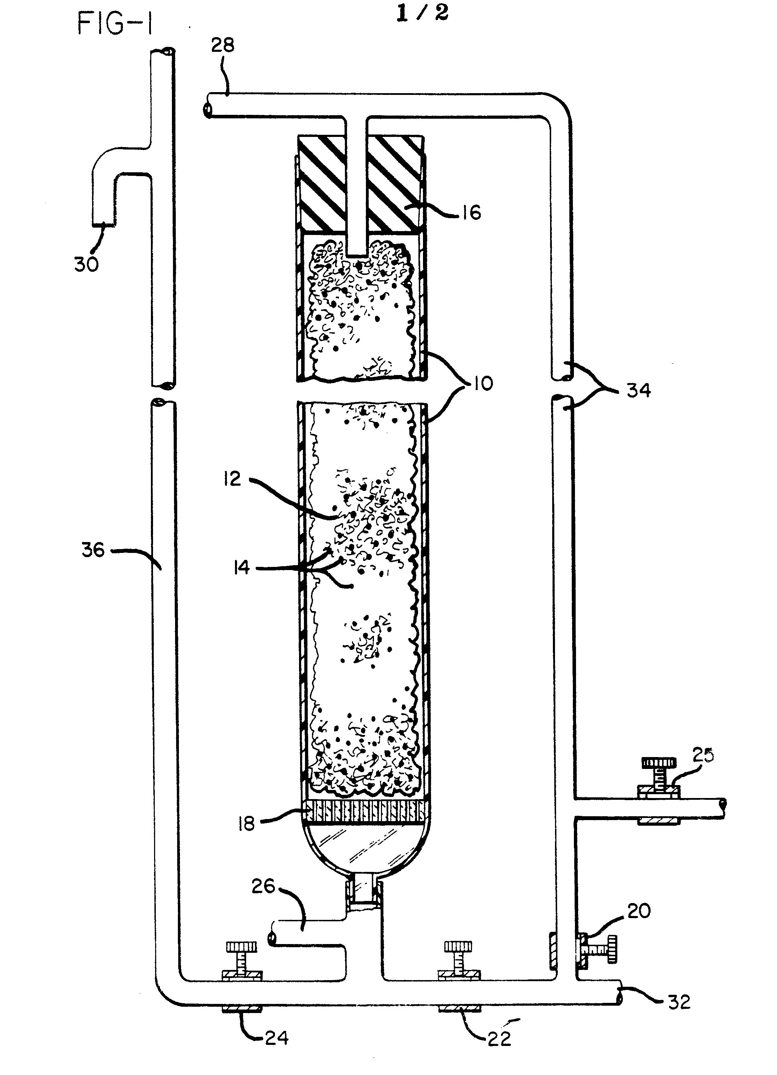

Referring now to Figure 1 which schematically illustrates the operation of an apparatus of the type which may be used in one embodiment of the present invention, water to be treated is pumped (by means not shown) through inlet 32 into pipe 34. During normal operation, valves 20 and 25 are open while valves 22 and 25 are closed. The water to be treated enters the top of the column 10 and flows downwardly over the magnetized resin particles 14 attached to magnetic mesh retention means 12. The magnetic mesh retention means 12 is supported in the column by support 18. After passing through column 10, the treated water is pumped through pipe 36 to outlet 30. To measure pressure drop in the column for the results reported in the examples below, the column was attached to a mercury differential manometer at sampling points 26 and 28. A commercial embodiment of the column would not have the monometer hookup.

When the fine mesh ion exchange particles in the column need regeneration, valves 20 and 24 are closed and valves 22 and 25 are opened. Regenerant solution, such as a brine (sodium chloride) solution, is pumped through the column 10 in a direction countercurrent to normal operation. Optimum regenerating conditions vary with the particular ion exchange resin used. In water softening systems, brine concentrations ranging from 8 to 16 percent are generally used. Such concentrations are directly related to the degree of resin crosslinking. As brine concentration increases, it causes the resin to shrink thereby inhibiting migration of ions into and out of the resin. At lower brine concentration, fewer sodium ions are available at any given time to displace divalent cations such as calcium and magnesium. It has been found that less concentrated brine solutions contacting the particles at high regeneration flow rates will yield the best results. The less concentrated brine solution are less viscous, and it has been found that regeneration of the resin is much more rapid when the regenerant solution is in turbulent flow.

The following examples illustrate the advantages to be attained through use of the apparatus of the present invention.

Example 1 - Comparison of pressure drops.

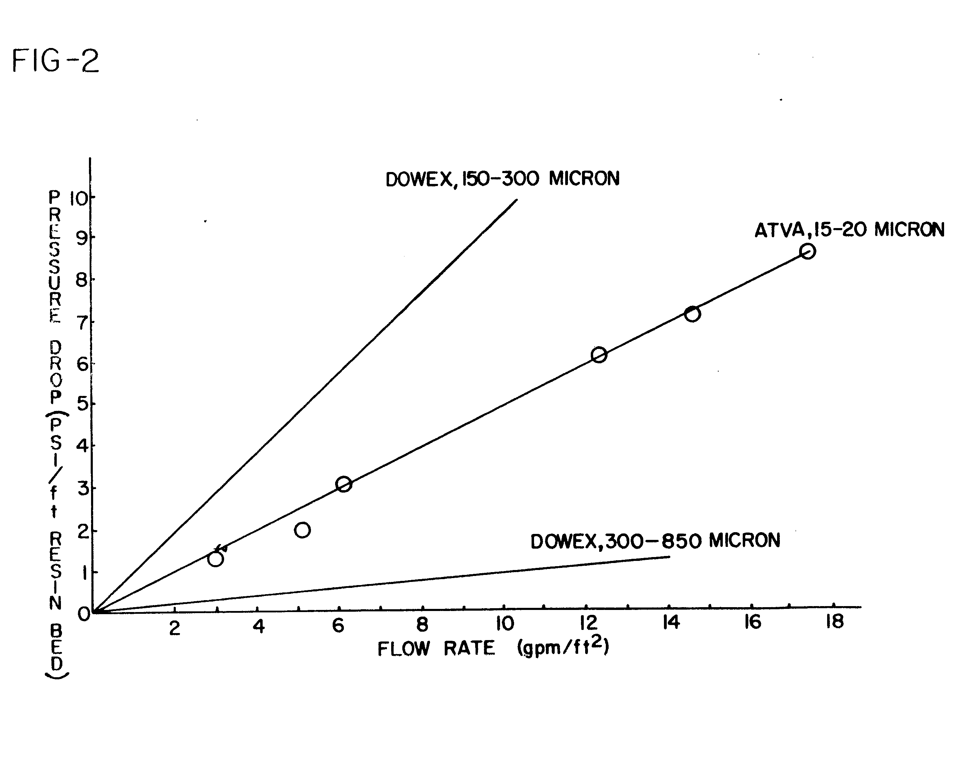

Data published by Dow Chemical Company, A Laboratory Manual on Ion Exchange (1971), on the effects of flow rates (gpm/ft$^2$) Versus pressure drop (psi/ft of resin bed) in columnar operation for a 300-850 micron and a 150-300 micron sized Dowex Styrene divinylbenzene were compared with pressure drops encountered when using the apparatus of the present invention. For comparison purposes, 15-20 micron size particles comprising a barium ferrite core encapsulated with ethylene-vinyl acetate cross-linked about 25 percent with a toluene diisocyanate adduct were dispersed in about $3.68 \times 10-4$ m$^3$ (approximately 0.013ft$^3$) of a stainless steel wool mesh in a 20 mm inside diameter column 400 cm in length. The results of the comparison are shown in Figure 2 in co-ordinates in imperial units. As can be seen, pressure drops in columnar operation using the 15-20 micron particle size five mesh ion exchange particles of the present invention are actually less than that encountered using 150-300 micron particle size resin and compare favorably to the even larger 300-850 micron particle size resin.

Example 2 - Regeneration contact times.

For maximum efficiency in regenerating most commercial ion exchange resin systems containing 300 to 1000 micron size styrene divinylbenzene resins, brine contact times (i.e., the length of time that the brine solution is in contact with the resin) should be about 50 minutes. Brine contact times of less than 10 minutes will decrease the operating capacity of the resin about 30 percent, and if brine contact times are reduced below 5 minutes, capacity will be decreased over 50 percent. Resin manufacturers recommend regeneration flow rates of from about 0.53 to 2.67 $l/s/m^3$ (approximately o.2 to 1.0 $gpm/ft^3$), noting that lower operating capacities will result if flow rates deviate significantly from this range.

For comparison purposes, the 15-20 micron size fine mesh ion exchange particles of Example 1 were regenerated using a 10 percent brine concentration and a brine loading of about 64 Kg. Na Cl $/m^3$ (approximately 4 lbs. $NaCl/ft^3$). Results are reported in the table below.

| $Q_R$ (1/s/m³) | $t_{C_R}$ (min) | $Q_S$ (1/s/m³) | $t_{C_S}$ (min) | $X_B$ (Kgr/m³) |
|---|---|---|---|---|
| 1.12 | 18.4 | 3.21 | 6.6 | 42.03 |
| 2.22 | 9.2 | 3.21 | 6.6 | 50.85 |
| 17.20 | 1.2 | 47.36 | 0.4 | 60.74 |
| 4.41 | 4.6 | 3.21 | 6.6 | 35.32 |
| 17.12 | 1.2 | 3.21 | 6.6 | 55.80 |

[a] brine loading = about 64 kg.NaCl /m³ (approximately) 4lbs NaCl/ft3

[b] brine loading = about 128 kg. NaCl/m³ (approximately) 8lbs NaCl/ft3

[1] 20% brine, all others at 10%

LEGEND:

| | |
|---|---|
| $Q_R$ | - Regen Flow Rate |
| $t_{C_R}$ | - Regen Contact Time |
| $Q_S$ | - Service Flow Rate |
| $t_{C_S}$ | - Service Contact Time |
| $X_{B_T}$ | - Breakthrough Capacity 17 mg/1 (1.0 grain/gallon) |

As can be seen, for the particular fine mesh ion exchange particles used, regeneration flow rates above about 16.05 1/s/m³ (approximately gpm/ft³) and brine contact times of as little as 1.2 min. yield significant increases in the operating capacity of the ion exchange particles. In fact, these data show that the greater the regeneration flow rate (within limits), the greater the increase in operating capacity (as shown by increased breakthrough capacity), and at brine contact times far less than those recommended for prior art systems.

Example 3 - Service cycle contact times.

With bed depths of about 76.2 cm (approximately 30 inches) or more, capacities obtained with conventionally sized ion exchange particle systems are decreased about 10 percent when service flow rates reach about 26.8 $l/s/m^3$ (approximately 10 gpm/ft$^3$) contact times of about 2 minutes) and fall significantly with increasing flow. Decreasing bed depth while maintaining a constant flow rate has essentially the same effect. Thus, for most commercial systems, service flow rates in the range of about 5.35 - 13.4 $l/s/m^3$ (approximately 2 to 5 gpm/ft$^3$) (contact times of 7.5. to 3.75 minutes) are recommended.

Again, using the fine mesh ion exchange particles of Example 1 for comparison purposes, service cycle flow rates from about 3.21 to 47.36 $l/s/m^3$ (approximately 1.2 to 17.7 gpm/ft$^3$) with corresponding contact times of 6.6. minutes to 25 seconds were run. As can be seen from the results reported in the table in Example 2, for the particular resin used, service flow rates far in excess of prior art systems were possible without decreasing the operating capacity of the system.

It is postulated that because of the extremely small particle size of the ion exchange particles used in the present invention, film diffusion (i.e., the diffusion of ions through the film of solution surrounding each particle) is the rate determining factor for the system used in the practice of this invention while for many prior art systems, particle diffusion (i.e., the diffusion of ions throughout a particle) is the rate determining factor. The above data bear this out because high flow rates serve to decrease the film thickness surrounding a given particle which increases the rate of exchange of film diffusion controlled systems. That is why high flow rates are advantageous to the system utilized in the practice of this invention.

As can be seen from the above examples, fine mesh ion exchange particles i.e.. less than approximately 20 micron particle size, can be used in th apparatus of the present invention with acceptable pressure drops during columnar operation while obtaining the rapid exchange benefits of the fine mesh ion exchange particles. Prior art plugging and fouling problems are avoided while the efficiency of the ion exchange process in water softening systems has been increased.

While the apparatus and methods herein described consistute preferred embodiments of the invention, it is to be understood that the invention is not limited to these precise methods or apparatus, and that changes may be made in either without departing from the scope of the invention, which is defined in the appended claims.

-15.-

CLAIMS

1. Apparatus for treating liquids characterised by a hollow column (10) with an inlet and an outlet; magnetic mesh retention means (12) disposed in said column; and fine mesh ion exchange particles (14) having a core of magnetic material encapsulated in an ion exchange resin magnetically attached to said retention means, whereby rapid exchange rates are achievable in said column without excessive pressure drop.

2. Apparatus as claimed in claim 1, wherein the particles (14) have a size of less than approximately 20 microns.

3. Apparatus as claimed in claim 1 or 2, wherein the retention means (12) comprise stainless steel wool.

4. Apparatus as claimed in claim 3, wherein the stainless steel wool occupies 2-5 percent of the total volume of the column (10).

5. Apparatus as claimed in any one of the preceding claims, wherein the ion exchange resin is a cation exchange material.

6. Apparatus as claimed in any one of the preceding claims 1 to 4, wherein the ion exchange resin is an anion exchange material.

7. Apparatus as claimed in any one of the preceding claims, wherein the core is barium ferrite.

8. Apparatus as claimed in any one of the preceding claims, including pump means for directing the liquid to be treated to the column (10)

0010969

- 16 -

and means for introducing a regenerant solution for the ion exchange resin into the column.

9. A method for treating liquids characterised by the steps of conveying liquid to be treated to the inlet of a column (10) containing fine mesh ion exchange particles (14) having a core of magnetic material encapsulated in an ion exchange resin and magnetically attached to magnetic mesh retention means (12) contacting said liquid with said resin particles in the column for a time sufficient to effect an ion exchange; and conveying the treated liquid from the column.

10. A method as claimed in claim 9, wherein the liquid to be treated is hard water, said ion exchange resin is a cation exchange material, and the treatment involves softening of said hard water to produce soft water.

11. A method as claimed in claim 9 or 10, wherein the particles (14) have a size of less than approximately 20 microns.

12. A method as claimed in claim 9, 10 or 11, wherein the retention means (12) is a stainless steel wool.

13. A method as claimed in claim 12, wherein the particles (14) are dispersed in the stainless steel wool by slowly adding said particles to the column (10) as liquid is pumped through the column at rates of about 48.16-53.52 $1/s/m^3$.

14. A method as claimed in claim 9,10,11,12 or 13, wherein the liquid to be treated is flowed through

0010969

the column (10) at a rate of less than about $48.16 \ l/s/m^3$, and the ion exchange resin is regenerated by treatment with a regenerant solution at a rate less than about $48.16 \ l/s/m^3$.

0010969

FIG-1

FIG-2

**European Patent Office**

**EUROPEAN SEARCH REPORT**

0010969
00 Application number

EP 79 30 2413

| Category | Citation of document with indication, where appropriate, of relevant passages | Relevant to claim |
|---|---|---|
| | FR - A - 2 371 959 (KERNFORSCHUNGS JULICH) <br> * Page 2, lines 9-40; page 3, lines 1-40; page 4, lines 1-40; page 5, lines 1-3 * | 1,2,5, 6,7 |
| A <br> D | GB - A - 1 231 601 (S.C.I.R.O.) <br> & US - A - 3 560 378 (TURBEVILLE) | |
| A | US - A - 2 893 561 (DUZICH) | |

## DOCUMENTS CONSIDERED TO BE RELEVANT

**CLASSIFICATION OF THE APPLICATION (Int. Cl. 3)**

B 01 J 47/02
C 02 F 1/42
B 01 D 15/00

**TECHNICAL FIELDS SEARCHED (Int.Cl. 3)**

B 01 J 47/02
C 02 F 1/42
B 01 D 15/00
C 22 B 3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 07-02-1980 | WENDLING |

EPO Form 1503.1 06.78